# EUROPÄISCHE PATENTSCHRIFT

(11) **EP 4 359 770 B1**
(45) Veröffentlichungstag und Bekanntmachung des Hinweises auf die Patenterteilung: **25.02.2026**
(21) Anmeldenummer: 22734602.0
(22) Anmeldetag: 22.06.2022
(51) Int. Cl.: G01N 21/64, G02B 21/00, G02B 27/58

(54) **VERFAHREN UND VORRICHTUNG ZUR ERFASSUNG VON HELLIGKEITSINFORMATIONEN EINER PROBE**
METHOD AND DEVICE FOR ACQUIRING BRIGHTNESS INFORMATION OF A SPECIMEN
PROCÉDÉ ET DISPOSITIF DE DÉTECTION D'INFORMATIONS DE LUMINOSITÉ D'UN ÉCHANTILLON

(30) Priorität: 23.06.2021 DE 102021206433
(43) Veröffentlichungstag der Anmeldung: 01.05.2024
(73) Patentinhaber: Carl Zeiss Microscopy GmbH, 07745 Jena (DE)
(72) Erfinder: HUHSE, Dieter, 07745 Jena (DE); KALININ, Stanislav, 07745 Jena (DE)
(74) Vertreter: Meyer, Jork
(86) Internationale Anmeldenummer: PCT/EP2022/066981
(87) Internationale Veröffentlichungsnummer: WO 2022/268868

(56) Entgegenhaltungen:
- WO-A1-2016/180403
- DE-A1- 102013 015 931
- SCIPIONI L. ET AL: "Comprehensive correlation analysis for super-resolution dynamic fingerprinting of cellular compartments using the Zeiss Airyscan detector", NATURE COMMUNICATIONS, vol. 9, no. 1, 1 December 2018 (2018-12-01), XP055966373, DOI: 10.1038/s41467-018-07513-2

## Beschreibung

Die Erfindung betrifft ein Verfahren und eine Vorrichtung gemäß den Oberbegriffen der unabhängigen Ansprüche.

Auf dem Gebiet der konfokalen scannenden Mikroskopie, insbesondere der konfokalen Laserscanning-Mikroskopie, ist die Fluoreszenzkorrelationsspektroskopie (fluorescence correlation spectroscopy; FCS) eine bewährte Methode, um beispielsweise die Dynamik des Verhaltens von Molekülen in Zellen zu untersuchen.

Die nachfolgend auch kurz als FCS bezeichnete Methode ist dabei ständig weiterentwickelt worden, sodass verschiedene Varianten der FCS zur Verfügung stehen (z. B.: Lenne et al., 2006; EMBO J. 25: 3245 - 3256 und Wenger et al., 2007; Biophys. J.. 92: 913 - 919 sowie WO 2016/180403 A1 und DE 10 2013 015 931 A1). Eine der Varianten ist die sogenannte "spot-variation FCS" (z. B.: Wawreznieck, L. et al., 2005; Biophys. J. 89: 4029 - 4042). Dabei wird eine Anregungsstrahlung fokussiert und in eine Probe gerichtet. Infolge der Fokussierung und der Ausdehnung des Fokus des fokussierten Strahlenbündels der Anregungsstrahlung sowohl quer (x- beziehungsweise y-Richtung) zur Ausbreitungsrichtung (i.d.R. optische Achse) als auch entlang der Ausbreitungsrichtung (z-Richtung) ist in Verbindung mit der konfokalen Detektion in der Probe ein sogenanntes konfokales Volumen beleuchtet. Helligkeitsinformationen (Messwerte) werden für verschieden große konfokale Volumina erfasst. Dazu wird die Numerische Apertur (NA) eines zur Beleuchtung verwendeten Objektivs variiert, wobei beispielsweise eine veränderbare Irisblende, auf einem Revolver oder einem Schieber angeordnete unterschiedliche Lochblenden oder ein Teleskop in dem Anregungsstrahlengang vorhanden sind und entsprechend angesteuert werden. Die Helligkeitsinformationen werden mittels eines optischen Detektors (z.B. Photodiode) erfasst.

Ein Nachteil dieses Ansatzes ist, dass für jede zu messende Volumengröße eine einzelne, langwierige Messung durchgeführt werden muss, die typischerweise 10 - 100 Sekunden je Einzelmessung dauert.

Aus der Publikation von Scipioni et al. (2018; Nature Communications; DOI: 10.1038/s41467-018-07513-2) ist eine Abwandlung der spot-variation FCS bekannt. Zur Erfassung wird ein ortsauflösender Flächendetektor verwendet, dessen Detektorelemente einzeln und unabhängig voneinander ausgelesen und ausgewertet werden können. Konkret wird bei Scipioni et al. ein als "Airyscan-Detektor" bezeichneter Detektortyp verwendet, der in einer Zwischenbildebene eines Detektionsstrahlengangs angeordnet ist und dessen jeweilige Detektorelemente als individuelle Lochblenden (Pinhole) fungieren (Huff, 2015, Nature Methods; Application Notes, December 2015). Bei dieser Verfahrensausgestaltung werden Helligkeitsinformationen ausgewählter Detektorelemente ausgewertet, wobei durch die Auswahl der Detektorelemente unterschiedlich große virtuelle Pinholes simuliert werden. Auf diese Weise können - virtuell - variierende konfokale Messvolumina erzeugt werden, obwohl das tatsächlich beleuchtete konfokale Anregungsvolumen konstant bleibt. Die Vorgehensweise gemäß der Veröffentlichung von Scipioni et al. (2018) erlaubt mit einer einzigen Messung die gleichzeitige Erfassung von Helligkeitsinformationen von bis zu vier verschiedenen Messvolumina.

Da besonders bei biologischen Proben eine möglichst geringe Belastung durch eine Anregungsstrahlung erwünscht ist, liegt der Erfindung die Aufgabe zugrunde, Möglichkeiten für eine weitere Steigerung der Erfassungsgeschwindigkeit, insbesondere für die Fluoreszenzkorrelationsspektroskopie, vorzuschlagen.

Die Aufgabe wird mit einem Verfahren zur Erfassung von Helligkeitsinformationen gelöst. Es wird außerdem eine Vorrichtung vorgeschlagen, die zur Lösung der Aufgabe geeignet ist. Verfahren und Vorrichtung sind Gegenstände der unabhängigen Ansprüche. Vorteilhafte Weiterentwicklungen der Erfindung sind Gegenstand der abhängigen Ansprüche.

In einem Verfahren gemäß Anspruch 1 zur Erfassung von Helligkeitsinformationen einer Probe, insbesondere mittels der Methodik der Fluoreszenzspektroskopie, werden in mindestens einem Messblock mit jeweils mindestens einem Messvorgang und jeweils einer Anzahl von Einzelmessungen umgesetzt. In einem ersten Messblock erfolgt in einem
- Schritt A ein Beleuchten einer Probe mit einem fokussierten Strahlenbündel einer Anregungsstrahlung unter Verwendung eines Objektivs, wobei die Anregungsstrahlung unter dem Winkelbereich einer ersten Numerischen Apertur auf beziehungsweise in die Probe gerichtet wird. Dazu wird eine erste Ausdehnung des Querschnitts des Strahlenbündels in der Eintrittspupille des Objektivs eingestellt.
- Ein Schritt B beinhaltet ein Erzeugen einer Detektionsstrahlung in einem durch die Beleuchtung bedingten Anregungsvolumen in der Probe. Dieses Anregungsvolumen wird auch als konfokales Volumen oder konfokales Anregungsvolumen bezeichnet. Die Detektionsstrahlung ist insbesondere eine Strahlung, die durch Wirkung der Anregungsstrahlung entsteht. So kann durch die Anregungsstrahlung, beispielsweise in Form einer Laserstrahlung, die Emission einer Detektionsstrahlung durch Fluorophore bewirkt werden, mit denen Strukturen, Organelle, Moleküle und/oder Bereiche der Probe markiert sind.
- In einem Schritt C erfolgt ein Erfassen der Detektionsstrahlung. Die Detektionsstrahlung wird vorteilhaft mit demselben Objektiv erfasst, mit dem auch die Beleuchtung erfolgt, um die technische Komplexität des Aufbaus einer verwendeten optischen Vorrichtung in einem vertretbaren Rahmen zu halten.
- Ein Schritt D umfasst das Führen der erfassten Detektionsstrahlung entlang eines Detektionsstrahlengangs und ein Abbilden der Detektionsstrahlung auf einen ortsauflösenden Detektor, der eine Anzahl von gruppenweise in gleichen Abständen um eine optische Achse des Detektionsstrahlengangs angeordnete und unabhängig voneinander auslesbare Detektorelemente aufweist. Eine Anordnung in Gruppen bedeutet im Sinne dieser Beschreibung, dass mindestens zwei Detektorelemente in einem gleichen Abstand von der optischen Achse angeordnet sind, d.h. eine Gruppe ist durch einen Abstand bestimmt, der für die Detektorelemente der betreffenden Gruppe gleich ist. Die Detektorelemente müssen nicht aneinander angrenzen. Außerdem können die Abstände der einzelnen Detektorelemente einer Gruppe von der optischen Achse innerhalb eines zulässigen Bereichs variieren. Eines der Detektorelemente kann auf der optischen Achse des Detektionsstrahlengangs liegen und eine eigene Gruppe bilden.
- In Schritt E werden Helligkeitsinformationen als Messwerte der Detektorelemente erfasst und erfasste Helligkeitsinformationen der jeweiligen Mitglieder mindestens einer ausgewählten Gruppe von gleich weit von der optischen Achse entfernt angeordneten Detektorelementen ausgewertet, insbesondere miteinander und/oder mit Helligkeitsinformationen einer weiteren Gruppe verrechnet. Es ist dabei insbesondere möglich, dass zugleich auch zusätzlich Helligkeitsinformationen weiterer Detektorelemente, beispielsweise weiterer Gruppen, erfasst werden, so dass insbesondere unterschiedlich große und/oder unterschiedlich geformte virtuelle Lochblenden oder Pinholes erzeugt werden können. Von Bedeutung ist, dass die gleichzeitig erfassten Helligkeitsinformationen einer Gruppe der betreffenden Gruppe zugeordnet werden können. Weiterhin ist es möglich, Helligkeitsinformationen von Detektorelementen mehrerer Gruppen zu erfassen und optional zu speichern oder zwischenzuspeichern, aber in einem Analysevorgang lediglich Helligkeitsinformationen ausgewählter Detektorelemente zu verwenden.

Das Verfahren umfasst ferner, dass die erste Numerische Apertur anhand der Probe ausgewählt wird, indem Werte mindestens einer Anzahl von optischen Eigenschaften der Probe erfasst werden und anhand der erfassten Werte die aktuelle erste Numerische Apertur ermittelt und eingestellt wird.

Unter den optischen Eigenschaften einer Probe werden beispielsweise deren räumliche Dimensionen, insbesondere deren Dicke, sowie die optische Dichte der Probe verstanden. Die optischen Eigenschaften werden zudem beispielsweise durch die Art eines Mediums bestimmt, in dem sich die Probe befindet und/oder das Bestandteil der Probe ist (z.B. Cytosol). Weiterhin können zum Beispiel eine erwartete oder ermittelte Anzahl, Art und Packungsdichte von Zellorganellen beziehungsweise Molekülen sowie verwendete Marker (zum Beispiel Fluorophore) als optische Eigenschaften der Probe angesehen werden.

Die jeweiligen Werte der Anzahl optischer Eigenschaften der Probe können beispielsweise vorab gemessen oder geschätzt werden. Alternativ oder ergänzend können alle oder einige der zu berücksichtigenden optischen Eigenschaften mittels geeigneter Simulationen ermittelt und für eine spätere Verwendung bereitgestellt werden. Unter dem Erfassen optischer Eigenschaften wird auch ein Ablesen entsprechender Werte aus einer bereitgestellten Übersicht (look-up-table; LUT) verstanden.

Die zur Verwendung im erfindungsgemäßen Verfahren vorgesehene Anzahl und Art der optischen Eigenschaften kann je Probentyp (feste Auswahl) oder je Probe (individuelle Auswahl) festgelegt werden. Beispielsweise kann aber auch die Anzahl und die Qualität der vorab ermittelten optischen Eigenschaften berücksichtigt werden und/oder während einer Verfahrensdurchführung angepasst werden (dynamische Auswahl).

Ferner werden nach dem Verfahren gemäß Anspruch 1 einem zweiten Messblock oder in weiteren Messblöcken die Schritte A bis E wiederholt, wobei in Schritt A entweder eine Ausdehnung des Strahlenbündels in der Eintrittspupille des Objektivs eingestellt wird, die von der Ausdehnung des Strahlenbündels des vorhergehenden Messblocks verschieden ist, oder ein Durchmesser eines Strahlenbündels der erfassten Detektionsstrahlung gegenüber dem ersten Messblock beziehungsweise gegenüber einem vorhergehenden Messblock verändert wird. Außerdem wird eine Ausdehnung eines Strahlenbündels der erfassten Detektionsstrahlung an die Größe der Detektionsfläche des Detektors angepasst, sodass die Detektionsfläche vollständig ausgeleuchtet ist. Diese Maßnahme stellt sicher, dass sämtliche verfügbaren Detektorelemente auch bei einer beispielsweise gegenüber der ersten Ausdehnung veränderten zweiten Ausdehnung verwendet werden können beziehungsweise keine unerwünschte Unterabtastung des Strahlenbündels der Detektionsstrahlung auftritt.

Erlaubt eine zur Ausführung des erfindungsgemäßen Verfahrens verwendete Beleuchtungs- und Abbildungsvorrichtung nur diskret einstellbare Blendendurchmesser (siehe unten) zur Einstellung der Ausdehnung des Strahlenbündels, kann manuell oder automatisch die am besten passende Kombination aus Blendendurchmesser und Airyscan-Zoom-Einstellung ausgewählt werden.

Kern der Erfindung ist die Kombination der Verwendung i) eines ortsauflösenden Detektors mit selektiv und individuell auslesbaren Detektorelementen mit ii) einer gesteuert variablen Einstellung der Ausdehnung des Strahlenbündels der Anregungsstrahlung zum Zwecke der Durchführung der Fluoreszenzkorrelationsspektroskopie (FCS). Je nach konkreter Ausgestaltung des Detektors können in dem ersten Messblock beispielsweise gleichzeitig vier Messvorgänge mit jeweils einer Mehrzahl von Einzelmessungen durchgeführt werden. Eine Einzelmessung ist die Erfassung der Helligkeitsinformationen eines Detektorelements. Nach deren Abschluss können in dem zweiten Messblock innerhalb kurzer Zeit beispielsweise vier weitere Messvorgänge gleichzeitig ausgeführt werden. Auf diese Weise sind innerhalb einer kurzen Zeitspanne zum Beispiel acht Messvorgänge ausführbar.

Die Einstellung der Ausdehnung des Strahlenbündels der Anregungsstrahlung kann in verschiedenen Ausgestaltungen des erfindungsgemäßen Verfahrens ausschließlich im Anregungsstrahlengang oder in einem gemeinsamen Abschnitt des Strahlengangs von Anregungsstrahlung und Detektionsstrahlung erfolgen. In einer weiteren Ausgestaltung kann im Detektionsstrahlengang die Ausdehnung des Strahlenbündels der Detektionsstrahlung gesteuert verändert werden, um die Wirkung einer Einstellung der Ausdehnung des Strahlenbündels der Anregungsstrahlung nachzuempfinden.

Als ortsauflösender Detektor kann vorteilhaft ein sogenannter Airyscan-Detektor verwendet werden, bei dem die Anordnung der Detektorelemente bereits an einen runden Querschnitt eines Strahlenbündels der Detektionsstrahlung angepasst ist. In weiteren Ausführungen der Erfindung können andere Detektoren verwendet werden, die im Detektionsstrahlengang in einer sogenannten Pinhole-Ebene (einem Zwischenbild) angeordnet sind und deren Detektorelemente selektiv einzeln ausgelesen werden können. Derartige Detektoren können beispielsweise SPAD-Arrays (single photon avalanche diode) sein. Die Detektorelemente können in weiteren Ausführungen der Erfindung in Zeilen und Spalten angeordnet sein. Um etwa gleich weit von der optischen Achse entfernte Detektorelemente den jeweiligen Gruppen zuzuordnen, können in den Spalten und/oder Zeilen individuell Detektorelemente ausgewählt und ausgelesen werden. Die jeweils ausgelesenen Messwerte der Detektorelemente werden dem Detektorelement und optional der Gruppe zugeordnet gespeichert und für eine weitere Verarbeitung bereitgehalten beziehungsweise bereitgestellt.

Das Verfahren kann in weiteren Ausgestaltungen mit weiteren Messblöcken, also mit einem dritten, vierten, usw. Messblock durchgeführt werden. Die vor- und nachstehenden Ausführungen gelten dann entsprechend.

Werden die Schritte A bis E in einem zweiten Messbloch oder in weiteren Messblöcken wiederholt, kann anhand der erfassten Werte eine korrigierte aktuelle Numerische Apertur ermittelt und eingestellt werden. Auf diese Weise ist es zum Beispiel einem Nutzer möglich, systematisch die für eine spezifische Probe geeignetste Konfiguration, und damit die beste Punktbildverwaschungsfunktion (point-spread-function; PSF), zu ermitteln.

Zur Vereinfachung der Beschreibung wird im Folgenden im Wesentlichen auf mindestens zwei Messblöcke Bezug genommen.

In einer Ausgestaltung des erfindungsgemäßen Verfahrens wird in den Messblöcken durch die jeweils ausgewählten Detektorelemente und die so bewirkten virtuellen Pinholes jeweils ein Anteil des konfokalen Anregungsvolumens in Form eines jeweiligen Messvolumens (entsprechend einem variierten Beleuchtungsspot) erfasst. Die mittleren Durchmesser der jeweiligen Anteile, beispielsweise einer Strahltaille des betreffenden Messvolumens, unterscheiden sich senkrecht zur optischen Achse um mindestens 5 nm. Auf diese Weise wird sichergestellt, dass mit jedem Messvorgang zusätzliche, bislang noch nicht erfasste Messwerte erlangt werden.

Gleiches gilt für die Wahl der zu erfassenden Anteile des Anregungsvolumens im Vergleich der zwei Messblöcke. Die zweite Ausdehnung des Strahlenbündels in der Eintrittspupille wird daher vorteilhaft so gewählt, dass sich die mittleren Durchmesser der in dem ersten und in dem zweiten Messblock erfassten Anteile des Anregungsvolumens um mindestens 5 nm unterscheiden.

Eine mögliche Ausgestaltung des erfindungsgemäßen Verfahrens besteht darin, dass in Schritt A des zweiten Messblocks die zweite Ausdehnung des Strahlenbündels in der Eintrittspupille des Objektivs geringer als die erste Ausdehnung des Strahlenbündels gewählt wird. Infolgedessen wird der Durchmesser des Strahlenbündels der Anregungsstrahlung, und somit die Ausdehnung des Strahlenbündels in der Eintrittspupille des Objektivs, verringert. Dies führt ebenfalls zu einer Einschränkung der Numerischen Apertur (NA), unter deren Winkelbereich die mittels des Objektivs fokussierte Anregungsstrahlung in die Probe gerichtet wird. Die Einschränkung der NA bedingt zugleich eine Vergrößerung der PSF (Punktbildverwaschungsfunktion; point spread function) der Anregung.

In einer vorteilhaften Ausgestaltung des erfindungsgemäßen Verfahrens wird die Ausdehnung des Strahlenbündels der Anregungsstrahlung gegenüber der Ausdehnung mindestens eines vorhergehenden Messblocks verringert. Zugleich wird eine numerische Apertur der Detektionsstrahlung unabhängig von den Ausdehnungen des Strahlenbündels der Anregungsstrahlung beibehalten. Eine solche Verfahrensausgestaltung wird mit einer Vorrichtung (siehe unten) unterstützt, bei der eine Einstellung der jeweiligen Ausdehnung des Strahlenbündels der Anregungsstrahlung ausschließlich im Anregungsstrahlengang erfolgt.

In weiteren Ausgestaltungen des erfindungsgemäßen Verfahrens kann auch die erste Numerische Apertur kleiner als die zweite Numerische Apertur beziehungsweise mindestens eines nachfolgenden Messblocks gewählt werden.

Die mittels des erfindungsgemäßen Verfahrens erfassten Helligkeitsinformationen können insbesondere zur Durchführung der Fluoreszenzkorrelationsspektroskopie genutzt werden. Dazu werden die erfassten Helligkeitsinformationen ausgewählter Detektorelemente unterschiedlicher Gruppen zueinander in eine räumliche und/oder zeitliche Beziehung zueinander gesetzt, was nachfolgend unter den Begriff des Verrechnens fällt.

In einer weiteren Ausgestaltung des erfindungsgemäßen wird Detektionsstrahlung mindestens zweier Wellenlängen bewirkt und erfasst. Messwerte der verschiedenen Wellenlängen werden ortsbezogen miteinander verglichen (z.B. Kreuzkorrelation).

Werden die Schritte A bis E in dem zweiten Messblock oder in weiteren Messblöcken wiederholt, kann anhand der erfassten Werte eine korrigierte aktuelle Numerische Apertur eines nachfolgenden Messblocks ermittelt und eingestellt werden. Auf diese Weise kann individuell auf die Eigenschaften und Wechselwirkungen einer Probe, der verwendeten Marker und/oder der Beleuchtungs- und Abbildungsvorrichtung (Vorrichtung zur Erfassung von Helligkeitsinformationen) reagiert werden.

Die Erfindung betrifft neben dem Verfahren auch eine Vorrichtung gemäß Anspruch 9 zur Erfassung von Helligkeitsinformationen einer Probe. Diese Vorrichtung umfasst einen Anregungsstrahlengang zum Führen eines Strahlenbündels einer Anregungsstrahlung, in dem ein Objektiv zur Erzeugung eines Fokus in einem Probenraum vorhanden ist. Außerdem ist ein Detektionsstrahlengang zum Führen eines Strahlenbündels einer aus dem Probenraum kommenden und mittels des Objektivs erfassten Detektionsstrahlung Bestandteil der Vorrichtung. Der Detektionsstrahlengang weist einen ortsauflösenden Detektor auf, der eine Mehrzahl von Detektorelementen umfasst, deren Helligkeitsinformationen unabhängig voneinander erfasst und ausgelesen werden können. Weiterhin sind in dem Detektionsstrahlengang Mittel zur gesteuerten Veränderung einer Ausdehnung des Strahlenbündels der Detektionsstrahlung enthalten. Durch deren Wirkung kann die Ausdehnung des Strahlenbündels der erfassten Detektionsstrahlung an die Größe der Detektionsfläche des Detektors angepasst werden. Auf diese Weise kann die Detektionsfläche vollständig ausgeleuchtet werden.

Die erfasste Detektionsstrahlung gelangt durch Wirkung eines Strahlteilers (Hauptfarbteiler) in den Detektionsstrahlengang. Der Hauptfarbteiler trennt dabei die erfasste Detektionsstrahlung von der eingestrahlten beziehungsweise reflektierten Anregungsstrahlung.

Kennzeichnend für die erfindungsgemäße Vorrichtung ist ein Mittel zur gesteuerten Einstellung einer Ausdehnung des Querschnitts des Strahlenbündels in der Eintrittspupille des Objektivs. Dieses Mittel kann besonders vorteilhaft in dem Anregungsstrahlengang angeordnet sein. In alternativen Ausführungen ist es auch möglich, dass das Mittel, bei damit verbundenen geringen Nachteilen, in einem gemeinsamen Strahlengang oder in dem Detektionsstrahlengang angeordnet ist. Eine ebenfalls mögliche Anordnung des Mittels im Detektionsstrahlengang, welche nicht Teil des Schutzumfangs der Vorrichtung ist, erzeugt indirekt und resultierend eine Wirkung, die dem Einstellen einer Ausdehnung des Querschnitts des Strahlenbündels in der Eintrittspupille des Objektivs gleichgesetzt wird.

Das Mittel zur gesteuerten Einstellung einer Ausdehnung des Querschnitts des Strahlenbündels in der Eintrittspupille des Objektivs kann beispielsweise eine verstellbare Blende wie eine Irisblende, mindestens eine in den Anregungsstrahlengang einbringbare Blende, ein Teleskop oder ein akustooptisches Element sein. Eine in den Anregungsstrahlengang einbringbare Blende kann zum Beispiel auf einem Revolver, einem Filterrad oder einem Schieber angeordnet oder schwenkbar oder klappbar gestaltet sein.

Die Form mindestens einer Öffnung der Blende kann lochförmig sein. In weiteren Ausführungen kann die Öffnung schlitzförmig oder oval sein. Ein mittels einer schlitzförmigen oder ovalen Blendenöffnung bewirkter länglicher Querschnitt des Strahlenbündels der Anregungsstrahlung erlaubt einen länglichen oder etwa linienförmigen Fokus in einer x-y-Ebene.

In einer weiteren Ausführung kann das Mittel zur gesteuerten Einstellung einer Ausdehnung des Querschnitts des Strahlenbündels ein Lichtmodulator (spatial light modulator; SLM) oder ein anderes phasenmodulierendes optisches Element sein. Sind diese optischen Elemente ansteuerbar, können auch Freiformen als Anregungsvolumina erzeugt werden, die optional zeitlich variabel sein können. Ein zeitlich variables Schalten kann hierbei in unterschiedlichen Zeitregimen erfolgen und erlaubt somit unterschiedliche Anwendungen. Beispielsweise erlaubt ein schnelles Schalten der Anregungsvolumina, wenn die Methode des Laser-Multiplexing, d.h. schnell zeitlich aufeinander abgestimmte (z. B. Einschalten der Laser in bestimmten Zeitfenstern; "gates") verwendet wird. Dieses Vorgehen kann beispielsweise für TCSPC (time correlated single photon counting) genutzt werden. Die (Anregungs-)Laser können in einem Zeitfenster zum Beispiel in der Größenordnung der Diffusionszeit der Moleküle ein- und ausgeschaltet werden. Die Anregungsvolumina können daher einzeln oder zusammen unabhängig voneinander in beliebigen zeitlichen Reihenfolgen geschaltet werden.

Das Mittel zur Anpassung der Ausdehnung des Strahlenbündels der erfassten Detektionsstrahlung an die Größe der Detektionsfläche des Detektors kann vorteilhaft eine Zoomoptik sein, wie diese bereits in einigen konfokalen Mikroskopen enthalten ist.

Die Vorrichtung gemäß Anspruch 9 umfasst zudem eine Steuereinheit, die dazu eingerichtet ist das Verfahren nach Anspruch 1 auszuführen und die zum Zwecke der Ansteuerung des Mittels zur Einstellung des Querschnitts des Strahlenbündels der Anregungsstrahlung in der Eintrittspupille des Objektivs und/oder des Mittels zur Einstellung der Ausdehnung des Querschnitts des Strahlenbündels der Detektionsstrahlung mit diesen verbunden ist. Die Steuereinheit ist derart konfiguriert, dass die jeweiligen Einstellungen der Mittel anhand vorbestimmter Beziehungen der Ausdehnungen der Querschnitte der Anregungsstrahlung und der Detektionsstrahlung erfolgt, indem die Steuereinheit entsprechende Steuerbefehle generiert und an Stellelemente der betreffenden Mittel zur Einstellung übermittelt. Mittels der so konfigurierten Steuereinheit kann das erfindungsgemäße Verfahren vorteilhaft effizient und reproduzierbar ausgeführt werden. Die Einstellungen der Ausdehnung des jeweiligen Strahlenbündels erfolgt durch ein Ansteuern des Mittels zur Einstellung der Ausdehnung des Querschnitts des Strahlenbündels infolge geeigneter Steuerbefehle, die durch die Steuereinheit generiert, indem Werte mindestens einer Anzahl von optischen Eigenschaften der Probe erfasst werden und anhand der erfassten Werte eine aktuelle Numerische Apertur ermittelt wird und an das Mittel zur Einstellung der Ausdehnung des Querschnitts des Strahlenbündels übermittelt und durch dieses ausgeführt werden. Die konkrete Ausgestaltung der Steuerbefehle kann modifiziert werden, indem Werte mindestens einer Anzahl von optischen Eigenschaften der Probe erfasst werden und anhand der erfassten Werte eine aktuelle Numerische Apertur ermittelt wird.

Das erfindungsgemäße Verfahren kann vorteilhaft zur Durchführung der Fluoreszenzkorrelationsspektroskopie (FCS) angewendet werden. Dabei können Korrelationen zwischen Messwerten von ausgewählten Detektorelementen unterschiedlicher Gruppen und/oder zwischen Detektorelementen einer gemeinsamen Gruppe berechnet werden. Ein Beispiel für eine solche Vorgehensweise ist aus der Publikation von Scipioni et al. (2018; siehe oben) bekannt. Ein weiterer Anwendungsfall der Erfindung besteht darin, dass konfokale Volumen (und damit die PSF) an die aktuell zu lösende (biologische) Messaufgabe anzupassen. Dadurch hat ein Anwender die Möglichkeit zu erkennen, ob beispielsweis eine Clusterbildung von Molekülen vorliegt. Könnte die Größe des konfokalen Volumens nicht variiert werden, kann bei einer ungünstigen Größe der PSF eine Domainbildung nicht erkannt. So kann die Domain zu klein oder zu groß für die System-PSF sein. In einer weiteren Anwendung kann die ungefähre Größe einer Domäne bestimmt werden. Um zu bestimmen, wie groß die entsprechenden Domänen oder inhomogenen Verteilungen von Molekülen oder Clusterbildung von Molekülen (je nach Anwendungsgebiet, z.B. in der Biomembranforschung, auch als "lipid rafts" bezeichnet) sind, führt der Nutzer Messungen bei verschiedenen PSF-Größen (also verschieden großen Probenarealen) aus. Beobachtete Effekte sind am stärksten bei PSF-Größen zu beobachten, die ungefähr halb so groß wie die zu beobachtenden Strukturen sind (Wawreznieck, L. et al., 2005; Biophys. J. 89: 4029 - 4042).

Es ist auch möglich, mehr als einen Farbstoff zu detektieren. Dazu kann beispielsweise ein Datenerfassung mittels zweier Detektionskanäle (2-Kanal-Airyscan) ausgeführt werden. Ziel ist es dann, die FCS-Messungen der verschiedenen Markierungen (Farbstoffe) am gleichen Ort miteinander zu korrelieren (Kreuzkorrelation). Auf diese Weise können Korrelationen der markierten und interessierenden biologischen Moleküle nachgewiesen und untersucht werden, ob beide Moleküle in einer Microdomain oder in einem "mesh" vorliegen, also sich nicht unabhängig voneinander bewegen.

Vorteile der Erfindung bestehen in der Steigerung der Erfassungsgeschwindigkeit von Helligkeitsinformationen bei zugleich geringer Belastung der abzubildenden Probe durch eine Anregungsstrahlung.

Außerdem eröffnet die Erfindung eine Reihe von Anwendungsmöglichkeiten. In einer möglichen Anwendung können Temperaturen und Viskositäten auf molekularer Ebene gemessen werden ("Nanotemperatur" bzw. "Nanoviskosität"). So können anhand von Diffusionsmessungen unter Verwendung der Erfindung Diffusionskoeffizienten ermittelt werden. Beispielsweise können vermessene Teilchen (z. B. Farbstoffmoleküle, fluoreszierende/lumineszierende Teilchen; zusammenfassend hier auch als "Körper" bezeichnet) eingesetzt werden, die als Vergleichsstandard dienen. Von den verwendeten Teilchen wird beispielsweise vorab der Diffusionskoeffizient als Funktion der Temperatur - und somit der Teilchenradius - bestimmt. Anhand der bekannten Abhängigkeit der Viskosität von der Temperatur kann aus einer FCS-Messung sofort die lokale Temperatur im Fokus abgeleitet werden.

Die Erfindung wird nachfolgend anhand von Ausführungsbeispielen und Abbildungen näher erläutert. Es zeigen:
- Fig. 1: eine schematische Darstellung eines ersten Ausführungsbeispiels einer erfindungsgemäßen Vorrichtung;
- Fig. 2: eine schematische Darstellung eines zweiten Ausführungsbeispiels einer erfindungsgemäßen Vorrichtung;
- Fig. 3: eine schematische Darstellung eines Beispiels, das nicht unter den Schutzumfang der Ansprüchen fällt;
- Fig. 4: eine schematische Darstellung eines Airyscan-Detektors mit einer beispielhaften Nummerierung der Detektorelemente;
- Fig. 5: eine schematische Darstellung eines ortsauflösenden 2D-Detektors mit einer beispielhaften Nummerierung der Detektorelemente;
- Fig. 6: eine schematische Darstellung einer ersten Gruppe von Detektorelementen eines Airyscan-Detektors;
- Fig. 7: eine schematische Darstellung einer ersten Gruppe von Detektorelementen eines 2D-Detektors;
- Fig. 8: eine schematische Darstellung von zwei Gruppen von Detektorelementen eines Airyscan-Detektors;
- Fig. 9: eine schematische Darstellung von zwei Gruppen von Detektorelementen eines 2D-Detektors;
- Fig. 10: eine schematische Darstellung von drei Gruppen von Detektorelementen eines Airyscan-Detektors;
- Fig. 11: eine schematische Darstellung von drei Gruppen von Detektorelementen eines 2D-Detektors;
- Fig. 12: eine schematische Darstellung von vier Gruppen von Detektorelementen eines Airyscan-Detektors;
- Fig. 13: eine schematische Darstellung von vier Gruppen von Detektorelementen eines 2D-Detektors;
- Fig. 14: eine schematische Darstellung einer Durchführung einer Verrechnung von Helligkeitsinformationen zweier unterschiedlicher Gruppen von Detektorelementen eines Airyscan-Detektors; und
- Fig. 15: eine schematische Darstellung einer Durchführung einer Verrechnung von Helligkeitsinformationen zweier unterschiedlicher Gruppen von Detektorelementen eines 2D-Detektors.

Die Abbildungen sind stark vereinfacht und beschränken sich in der Darstellung auf die zur Erläuterung erforderlichen technischen Elemente. Ebenso sind die Strahlengänge stark vereinfacht gezeigt.

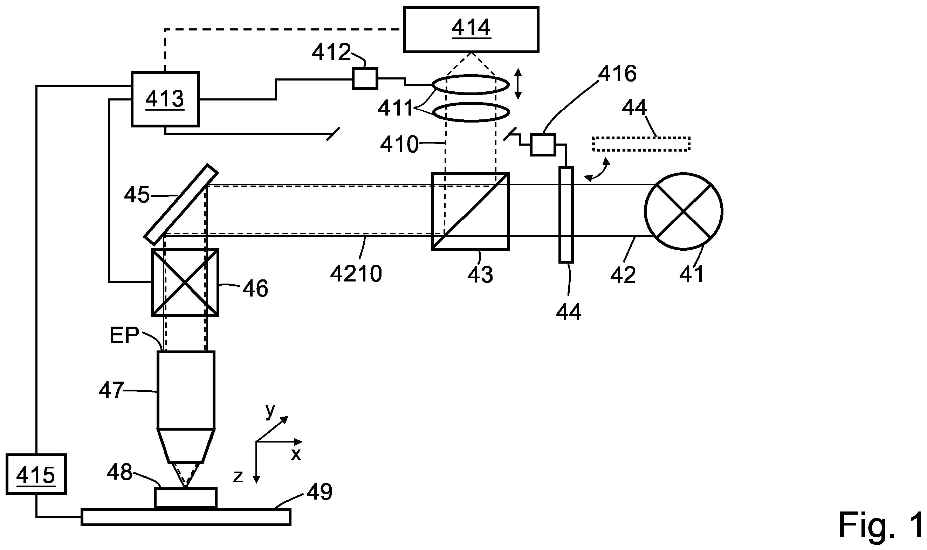

Ein erstes Ausführungsbeispiel einer Vorrichtung zur Erfassung von Helligkeitsinformationen einer Probe (Fig. 1) umfasst eine Lichtquelle 41, beispielsweise eine Laserlichtquelle, von der ausgehend ein Strahlenbündel einer Anregungsstrahlung ausgesendet und entlang eines Anregungsstrahlengangs 42 geführt wird. Optional vorhandene optische Elemente zur Formung und/oder Kollimation der Anregungsstrahlung sind nicht dargestellt. Im Anregungsstrahlengang 42 ist ein Mittel 44 zur gesteuerten Veränderung einer Ausdehnung des Strahlenbündels angeordnet, das im Ausführungsbeispiel als eine gesteuert einstellbare Blende ausgebildet ist. In weiteren Ausführungen kann auch ein Revolver oder ein Schieber vorhanden sein, mittels dem unterschiedliche Blenden in den Anregungsstrahlengang 42 eingebracht werden können. Alternativ kann das Mittel 44 auch ein gesteuert einstellbares Teleskop oder ein akustooptisches Element sein.

Das Mittel 44 kann mittels eines Antriebs 416 aus dem Anregungsstrahlengang 42 herausbewegt werden (mit unterbrochener Volllinie angedeutet gezeigt), um unterschiedliche Numerische Aperturen zu bewirken, unter deren jeweiligen Winkelbereichen die Anregungsstrahlung in eine abzubildende Probe 48 gerichtet werden kann. Das Mittel 44 kann in weiteren Ausführungen hinsichtlich seiner Durchlässigkeit für die Anregungsstrahlung , insbesondere hinsichtlich eines Lochdurchmesser (Lochblende, Irisblende) oder der Länge und Breite eines Schlitzes (einstellbare Schlitzblende, akustooptisches Element) einstellbar sein.

Die Anregungsstrahlung trifft nach dem Durchgang durch das Mittel 44 auf einen Hauptfarbteiler 43, der für die Anregungsstrahlung durchlässig ist und diese passieren lässt. Nach dem Hauptfarbteiler 43 durchläuft die Anregungsstrahlung einen Abschnitt des Strahlengangs der Vorrichtung, der als gemeinsamer Strahlengang 4210 bezeichnet wird und entlang dem die Anregungsstrahlung und eine Detektionsstrahlung (siehe unten) gemeinsam geführt sind beziehungsweise gemeinsam geführt werden können.

Mittels eines nachfolgend angeordneten Scanners 46 kann das zuvor mittels eines Spiegels 45 umgelenkte Strahlenbündel der Anregungsstrahlung gesteuert abgelenkt und in die Eintrittspupille EP eines Objektivs 47 gerichtet werden. Der Spiegel 45 erlaubt eine kompakte Bauweise und kann in weiteren Ausführungen der Vorrichtung fehlen, wenn keine Umlenkung des Anregungsstrahlengangs 42 erforderlich oder vorgesehen ist.

Die durch Wirkung des Mittels 44 in seiner lateralen Ausdehnung eingestellte und mittels des Scanners 46 gesteuert abgelenkte Anregungsstrahlung wird durch Wirkung des Objektivs 47 in einen Probenraum fokussiert, in dem die abzubildende Probe 48 auf einem Probentisch 49 vorhanden sein kann. Die derart fokussiert eingestrahlte Anregungsstrahlung bewirkt ein konfokales Anregungsvolumen.

Eine in der Probe 48 durch die Anregungsstrahlung in dem konfokalen Anregungsvolumen bewirkte Detektionsstrahlung wird mit dem Objektiv 47 erfasst und entlang eines Detektionsstrahlengangs 410 (mit unterbrochenen Volllinien gezeigt), der bis zum Hauptfarbteiler 43 mit dem Anregungsstrahlengang 42 zusammenfällt, geführt.

In weiteren Ausführungen der erfindungsgemäßen Vorrichtung kann die Detektionsstrahlung mittels eines weiteren Objektivs (nicht gezeigt) erfasst werden. In einem solchen Fall können Anregungsstrahlengang 42 und Detektionsstrahlengang 410 vollständig voneinander getrennt sein oder diese werden, beispielsweise mittels eines weiteren Farbteilers (nicht gezeigt), wieder zu dem gemeinsamen Strahlengang 4210 vereinigt.

Die Detektionsstrahlung wird im dargestellten Ausführungsbeispiel infolge des Passierens des Scanners 46 in einen ruhenden Strahl überführt ("descannt") und gelangt zum Hautfarbteiler 43. Dieser ist für die Wellenlänge der Detektionsstrahlung, die von der Wellenlänge der Anregungsstrahlung verschieden ist, reflektierend. Die am Hauptfarbteiler 43 reflektierte Detektionsstrahlung gelangt zu einer im Detektionsstrahlengang 410 vorhandenen Zoomoptik 411. Diese ist mittels eines Zoomantriebs 412 einstellbar. In weiteren Ausführungen können die Durchlässigkeit und die Reflektivität des Hauptfarbteilers 43 auch umgedreht umgesetzt sein, sodass die Anregungsstrahlung reflektiert und die Detektionsstrahlung durchgelassen wird. Entsprechend sind dann die Strahlengänge 42 und 410 zu gestalten.

Das Mittel 44, der Scanner 46, der Zoomantrieb 412 und die Antriebe 415 und 416 sowie optional die Lichtquelle 41 stehen mit einer Steuereinheit 413 in einer zum Austausch von Daten und Steuerbefehlen geeigneten Verbindung. Die Steuereinheit 413 ist beispielsweise ein Rechner oder ein geeigneter Steuerschaltkreis.

Die Zoomoptik 411 stellt ein Mittel zur gesteuerten Veränderung einer Ausdehnung des Strahlenbündels der Detektionsstrahlung dar, mittels der die Ausdehnung eines Strahlenbündels der erfassten Detektionsstrahlung an die Größe einer Detektionsfläche eines ebenfalls im Detektionsstrahlengang 410 in einem Zwischenbild ("Pinhole-Ebene") angeordneten ortsauflösenden Detektors 414 angepasst werden kann. Ziel dabei ist es, die Detektionsfläche möglichst vollständig auszuleuchten. Dementsprechend wird die Detektionsstrahlung mittels der Zoomoptik 411 auf den Detektor 414 gerichtet und mittels des Zoomantriebs 412 hinsichtlich der Ausdehnung ihres Strahlenbündels angepasst.

Optional können die Steuereinheit 413 und der Detektor 414 miteinander verbunden sein, um zum Beispiel der Steuereinheit 413 anhand der erfassten Helligkeitsinformationen des Detektors 414 die Generierung von Steuerbefehlen zu ermöglichen und/oder um diese zu validieren. Diese Steuerbefehle dienen beispielsweise dazu, die Lichtquelle 41, das Mittel 44, den Scanner 46, den Zoomantrieb 412 und/oder einen optionalen Antrieb 415 des Probentischs 49 anzusteuern.

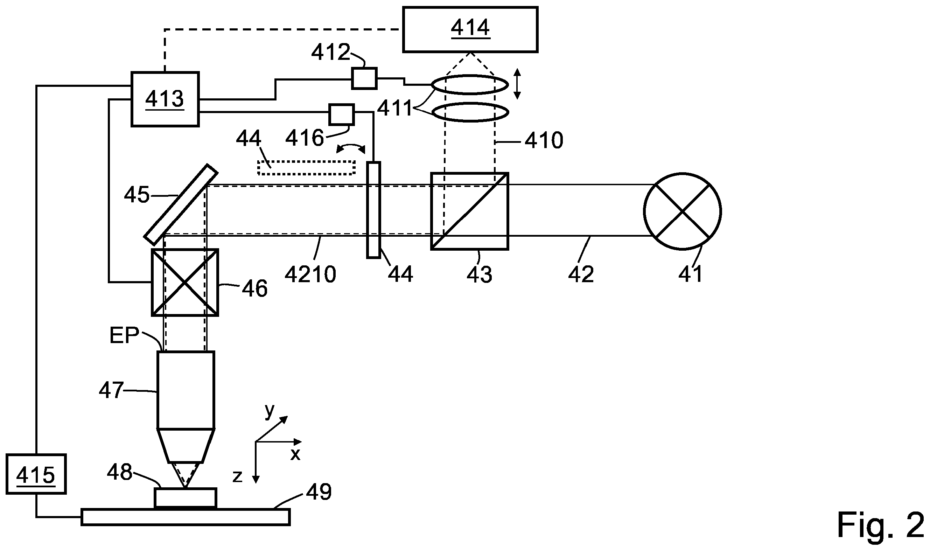

In einem zweiten Ausführungsbeispiel der erfindungsgemäßen Vorrichtung ist das Mittel 44 in dem gemeinsamen Strahlengang 4210 angeordnet (Fig. 2). Dabei passieren sowohl die Anregungsstrahlung als auch die Detektionsstrahlung das Mittel 44, wenn es wie dargestellt in den gemeinsamen Strahlengang 4210 eingebracht ist.

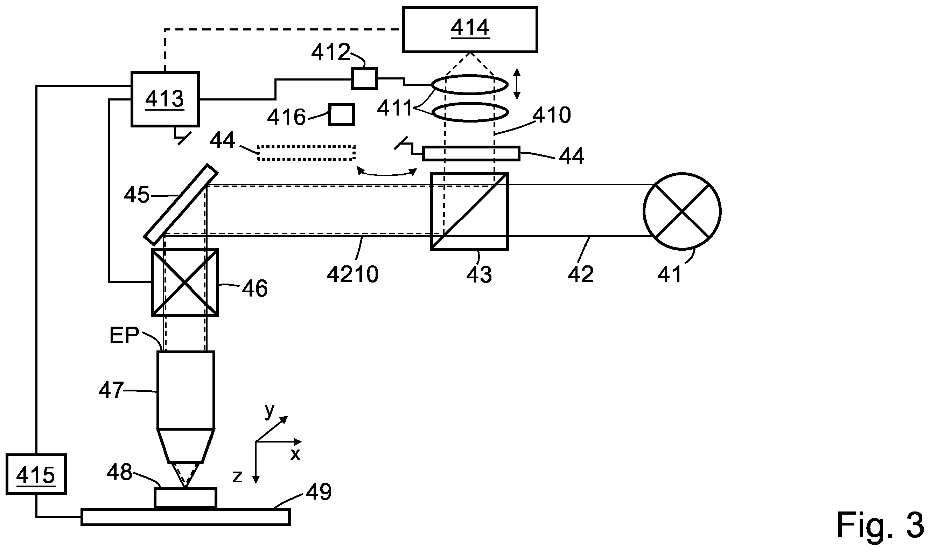

Die Anordnung des Mittels 44 ist gemäß eines Beispiels, das nicht unter den Schutzumfang der Ansprüche fällt, auch in dem Detektionsstrahlengang 410 möglich (Fig. 3). Dabei wird durch eine aktuelle Einstellung des Mittels 44 eine Wirkung hervorgerufen, also ob die Ausdehnung des Strahlenbündels der Anregungsstrahlung in der Eintrittspupille EP des Objektivs 47 variiert worden wäre.

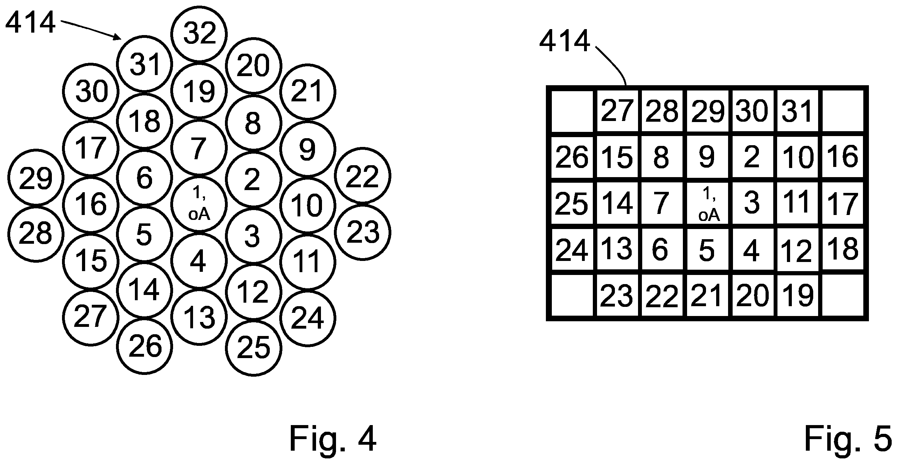

Schritte und Ausgestaltungen eines erfindungsgemäßen Verfahrens werden nachfolgend unter Bezug auf die Figuren 4 bis 15 erläutert. Die Fig. 4 zeigt schematisch die Draufsicht auf die Detektionsfläche eines Airyscan-Detektors, der als ein ortsauflösender Detektor 414 verwendet werden kann. Die Helligkeitsinformationen der Detektorelemente 1 bis 32 sind einzeln auslesbar und können zudem beliebig miteinander kombiniert werden ("binning"). Die Ausdehnung des Strahlenbündels der Detektionsstrahlung kann so gewählt werden, dass diese mit 1,25 Airy-Units (AU) auf die Detektionsfläche fällt. Dabei kann beispielsweise jedes der Detektionselemente 1 bis 32 einen Ausschnitt von 0,2 AU erfassen. Das zentrale und mit dem Bezugszeichen "1" bezeichneten Detektorelement befindet sich auf der optischen Achse (oA) des Detektionsstrahlengangs 410.

In der Figur 5 ist eine weitere Ausführung eines ortsauflösenden Detektors 414 in einer zeilen- und spaltenweisen Anordnung der Detektorelemente 1 bis 31 (nachfolgend auch: 2D-Detektor) gezeigt, wie diese beispielsweise in einem SPAD-Array, einem CMOS-Chip oder sCMOS-Chip realisiert sein kann.

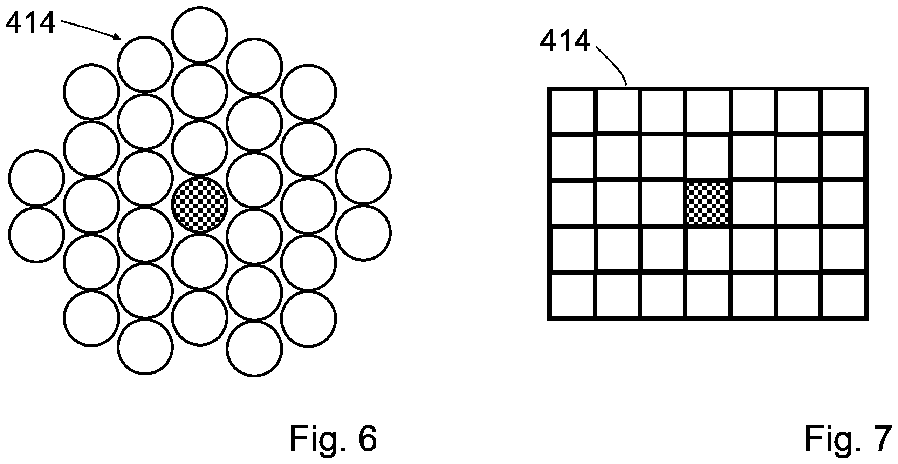

In den folgenden Figuren 6 bis 15 werden jeweils technische Sachverhalte anhand der Detektorelemente 1 bis 31 beziehungsweise 32 eines Detektors 414 des Typs eines Airyscan-Detektors und eines Detektors 414 mit etwa rechteckiger, also zeilen- und spaltenweiser, Anordnung der Detektorelemente 1 bis 31 angegeben. Bei einer nachfolgenden Angabe der Nummern der betreffenden Detektorelemente wird auf Figur 4 beziehungsweise auf Figur 5 Bezug genommen. Das zentrale Detektorelement 1 ist in den folgenden Figuren 6 bis 15 zum Zwecke der besseren Übersichtlichkeit mit einem Schachbrettmuster gefüllt dargestellt.

Für die Durchführung eines erfindungsgemäßen Verfahrens können die erfassten Helligkeitsinformationen der Detektorelemente 1 bis 32 gezielt miteinander verrechnet werden. Wie in den folgenden Figuren 6 bis 13 gezeigt wird, können dabei verschieden große virtuelle Lochblenden (Pinholes) erzeugt werden, indem die zeitgleich erfassten Helligkeitsinformationen der Detektorelemente 1 bis 32 selektiv aufaddiert werden. Dabei werden vorteilhaft die Helligkeitsinformationen sämtlicher Detektorelemente 1 bis 32 beziehungsweise 1 bis 31 erfasst und die virtuellen Pinholes durch eine gezielte Auswahl der erfassten Helligkeitsinformationen erzeugt. Erfasste Helligkeitsinformationen können dabei natürlich für die Analyse verschiedener Pinholes verwendet werden, weshalb diese vorteilhaft gespeichert vorgehalten werden. So wird beispielsweise die Helligkeitsinformation des Detektorelements 1 bei der Auswertung aller Pinholes verwendet.

Für die Simulation eines Pinholes mit einem möglichst geringen Durchmesser werden nur die Helligkeitsinformationen des Detektorelements 1 verwendet. Diese bilden damit jeweils eine erste Gruppe von Detektorelementen eines Airyscan-Detektors (Fig. 6) beziehungsweise eines 2D-Detektors (Fig. 7). Die Helligkeitsinformationen der Detektorelemente 1 repräsentieren ein erstes Messvolumen innerhalb eines konfokalen Anregungsvolumens.

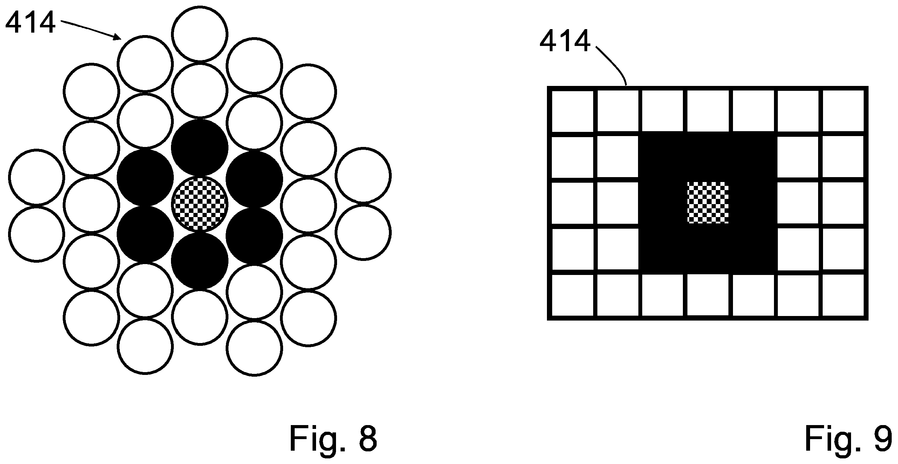

Ein virtuelles Pinhole mit einem größeren Durchmesser kann erhalten werden, wenn die Helligkeitsinformationen der Detektorelemente 1 sowie 2 bis 7 (Fig. 8; schwarz hinterlegt) beziehungsweise der Detektorelemente 1 sowie 2 bis 9 (Fig. 9; schwarz hinterlegt), die jeweils eine Gruppe bilden, verrechnet werden. Die Detektorelemente 1 bis 7 beziehungsweise 1 bis 9 können auch als eine gemeinsamen oder als eine zusammengesetzte Gruppe bezeichnet werden. Die gemeinsame Gruppe aus den genannten Detektorelementen erfasst Helligkeitsinformationen eines zweiten Messvolumens innerhalb des konfokalen Anregungsvolumens.

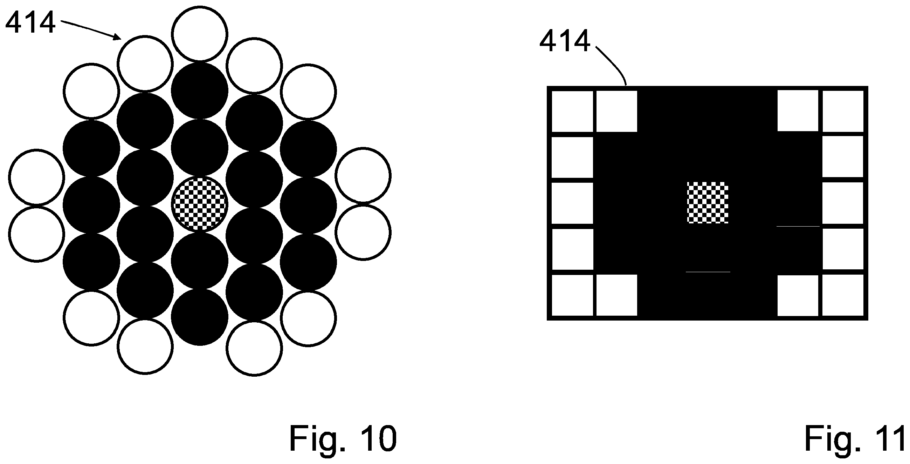

Eine Anzahl von Detektorelementen zur Darstellung eines virtuellen Pinholes mit einem noch größeren Durchmesser ist in den Fig. 10 beziehungsweise Fig. 11 gezeigt. Mit der Musterfüllung beziehungsweise schwarz hinterlegt sind beispielhaft drei Gruppen von Detektorelementen visualisiert, durch die eine weitere gemeinsame Gruppe gebildet ist. In Fig. 10 (Airyscan-Detektor) sind dies in der ersten Gruppe das Detektorelement 1, in der zweiten Gruppe die Detektorelemente 2 bis 7 und in der dritten Gruppe die Detektorelemente 8 bis 19. In Fig. 11 (2D-Detektor) sind dies in der ersten Gruppe das Detektorelement 1, in der zweiten Gruppe die Detektorelemente 2 bis 9 und in der dritten Gruppe die Detektorelemente 10 bis 12, 13 bis 15, 20 bis 23 und 28 bis 30. Die derart gebildeten virtuellen Pinholes erlauben jeweils die Erfassung von Helligkeitsinformationen eines dritten Messvolumens.

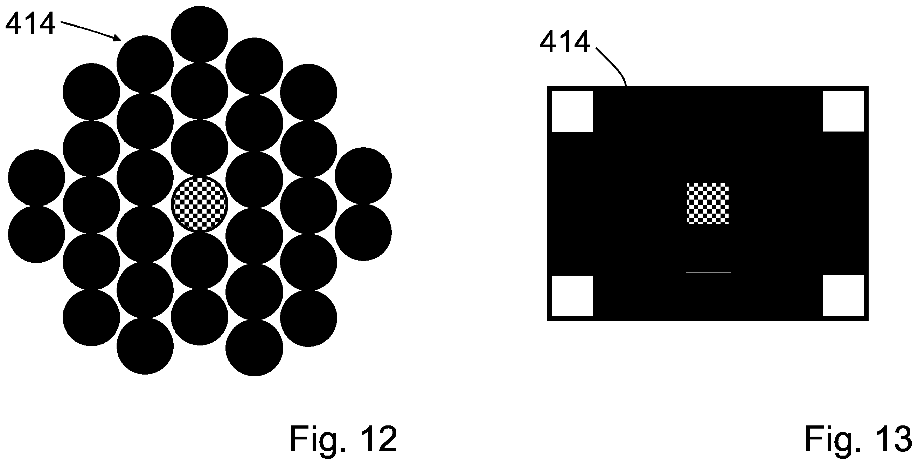

Eine Auswahl der Detektorelemente 1 bis 32 (Airyscan-Detektor, Fig. 12) beziehungsweise der Detektorelemente 1 bis 31 (2D-Detektor, Fig. 13) als vier Gruppen von Detektorelementen führt jeweils zur Darstellung eines virtuellen Pinholes mit einem größtmöglichen Durchmesser, welches die Erfassung von Helligkeitsinformationen eines vierten Messvolumens erlaubt.

Mit der Musterfüllung beziehungsweise schwarz hinterlegt sind beispielhaft vier Gruppen von Detektorelementen visualisiert. In Fig. 12 (Airyscan-Detektor) sind dies in der ersten Gruppe das Detektorelement 1, in der zweiten Gruppe die Detektorelemente 2 bis 7, in der dritten Gruppe die Detektorelemente 8 bis 19 und in der vierten Gruppe die Detektorelemente 20 bis 32. In Fig. 13 (2D-Detektor) sind dies in der ersten Gruppe das Detektorelement 1, in der zweiten Gruppe die Detektorelemente 2 bis 9, in der dritten Gruppe die Detektorelemente 10 bis 12, 13 bis 15, 20 bis 23 und 28 bis 30 und in der vierten Gruppe die Detektorelemente 16 bis 19, 23 bis 27 und 31.

Bei der Durchführung eines erfindungsgemäßen Verfahrens unter Verwendung einer erfindungsgemäßen Vorrichtung gemäß Fig. 1 kann ein erster Messblock ausgeführt werden, in dessen Rahmen vier Messvolumina des konfokalen Anregungsvolumens der Probe 48 gleichzeitig gemessen werden. Dabei wird die Zoomoptik 411 beispielsweise so eingestellt, dass die Detektionsstrahlung mit 1,25 AU auf die Detektionsfläche des Detektors 414 fällt. Jedes der vier oben beschriebenen virtuellen Pinholes repräsentiert dabei einen Durchmesser eines Messvolumens, wobei die Durchmesser der Messvolumina (Spotdurchmesser) von den aktuellen optischen Gegebenheiten des Mikroskops und der aktuell gewählten Numerischen Apertur abhängen, mit der die Anregungsstrahlung in die Eintrittspupille EP des Objektivs 47 fällt (siehe unten).

In einem Schritt A erfolgt ein Beleuchten der Probe 48 mit dem fokussierten Strahlenbündel der Anregungsstrahlung unter Verwendung des Objektivs 47. Dabei wird die Anregungsstrahlung unter dem Winkelbereich einer ersten Numerischen Apertur auf und/oder in die Probe 48 gerichtet, indem eine erste Ausdehnung des Querschnitts des Strahlenbündels in der Eintrittspupille EP des Objektivs 47 eingestellt wird. Dazu kann beispielsweise das Mittel 44 aus dem Anregungsstrahlengang 42 herausbewegt beziehungsweise mit einer ersten Einstellung seiner freien Öffnung im Anregungsstrahlengang 42 angeordnet sein.

In Schritt B: wird die Detektionsstrahlung in einem durch die Beleuchtung bedingten konfokalen Anregungsvolumen in der Probe 48 erzeugt.

Mit dem Schritt C erfolgt ein Erfassen der Detektionsstrahlung unter dem Winkelbereich der ersten Numerischen Apertur mittels des Objektivs 47.

Die erfasste Detektionsstrahlung wird in Schritt D entlang des Detektionsstrahlengangs 410 geführt und auf den ortsauflösenden Detektor 414 abgebildet.

Die Helligkeitsinformationen der jeweiligen Mitglieder einer Gruppe von insbesondere annähernd gleich weit von der optischen Achse entfernt angeordneten Detektorelementen der Gesamtheit von Detektorelementen 1 bis 31 beziehungsweise 1 bis 32 werden erfasst und den jeweiligen Detektorelementen beziehungsweise Gruppen zugeordnet.

In einem zweiten Messblock werden die Schritte A bis E wiederholt, wobei in Schritt A eine zweite Ausdehnung des Strahlenbündels (zweite NA) in der Eintrittspupille EP des Objektivs 47 eingestellt wird, die von der ersten Ausdehnung (erste NA) verschieden, insbesondere geringer, ist. Dadurch wird die Anregungsstrahlung unter dem Winkelbereich der zweiten Numerischen Apertur auf und/oder in die Probe 48 gerichtet. Dazu kann beispielsweise das Mittel 44 in den Anregungsstrahlengang 42 hineinbewegt beziehungsweise mit einer zweiten Einstellung seiner freien Öffnung im Anregungsstrahlengang 42 angeordnet sein.

Eine Einschränkung der lateralen Ausdehnung des Strahlenbündels der Anregungsstrahlung führt zu einer gegenüber der ersten Numerischen Apertur geringeren zweiten Numerischen Apertur, wodurch eine Vergrößerung der Anregungs-PSF bewirkt wird (PSF = Punktbildverwaschungsfunktion; point spread function).

Entsprechend der gewählten zweiten Numerischen Apertur werden mittels der Steuereinheit 413 Steuerbefehle generiert und an den Zoomantrieb 412 übermittelt, um die Zoomoptik 411 so anzupassen, dass erneut eine sinnvolle Ausleuchtung der Detektionsfläche des Detektors 414 erreicht ist.

Die tatsächlichen Werte beispielsweise der ersten und der zweiten Numerischen Apertur sowie der bewirkten Vergrößerung der Zoomoptik 411 werden vorteilhaft so gewählt, dass sich in der Gesamtheit der optischen Parameter Messvolumina ergeben, die sowohl genügend weit voneinander als auch weit genug von den Messvolumina anderer Messblöcke entfernt sind, um weitere sinnvolle Messvorgänge zu ermöglichen. Auf diese Weise ist es möglich, mit nur einem weiteren Messvorgang vier weitere Messvolumina für die Auswertung der hier beschriebenen "spot-variation FCS" - Technik zu erhalten.

In einem möglichen Experiment kann ein 40x/1,2 Objektiv 47 verwendet werden. In einem ersten Messblock werden mit der ersten Numerischen Apertur beispielsweise vier Messvolumina mit Spotdurchmessern von beispielsweise 170 nm, 190 nm, 225 nm und 245 nm erfasst. Das Mittel 44 ist dabei aus dem Anregungsstrahlengang 42 herausbewegt. Wird nun im zweiten Messblock das Mittel 44 in Form einer Blende mit 1/1,4 des Durchmessers der Objektivpupille EP in den Anregungsstrahlengang 42 eingeschwenkt (zweite Numerische Apertur) und gleichzeitig die Vergrößerung der Zoomoptik 411 um einen Faktor 1,4 angepasst, so können mit nur einer weiteren Messung vier weitere Messvolumina mit Spotdurchmessern von 195 nm, 240 nm, 275 nm und 285 nm erfasst werden. Das tatsächlich beleuchtete konfokale Anregungsvolumen bleibt im ersten Messblock beziehungsweise im zweiten Messblock konstant.

Diese Vorgehensweise kann in weiteren Ausgestaltungen des erfindungsgemäßen Verfahrens abgewandelt werden. Zum Beispiel kann die zweite Numerische Apertur unter Verwendung einer Blende 1/2,8 des Durchmessers der Objektivpupille EP gewählt und 1 AU für die Zoomoptik 411 eingestellt werden. Auf diese Weise können in einem zweiten Messblock vier weitere Messvolumina mit Spotdurchmessern in einem Bereich von 300 bis 500 nm erfasst werden.

Mit einem erfindungsgemäßen Verfahren ist es daher vorteilhaft möglich, in einem Verfahrensdurchlauf mit erstem und zweitem Messblock doppelt so viel Messwerte wie in vergleichbaren Verfahren gemäß dem Stand der Technik zu erfassen. Trotzdem ist diese Erfassung etwa viermal so schnell, als wenn alle acht Messvorgänge (siehe oben) einzeln mit der bekannten Spotscan-FCS-Methode vorgenommen werden würden.

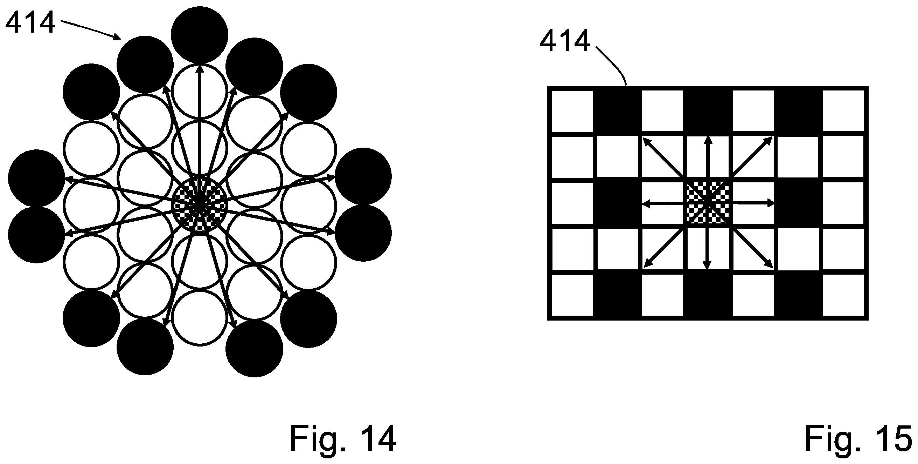

Eine mögliche Verrechnung von Helligkeitsinformationen zweier unterschiedlicher Gruppen von Detektorelementen eines Airyscan-Detektors ist schematisch in Fig. 14 gezeigt. Das detaillierte Vorgehen ist beispielsweise ausführlich in Scipioni et al. (2018; Nature Communications; DOI: 10.1038/s41467-018-07513-2) beschrieben.

Dabei können Kreuzkorrelationen zwischen den Helligkeitsinformationen der ersten Gruppe und der vierten Gruppe (siehe auch oben) berechnet werden. Die erste Gruppe ist dabei aus den Helligkeitsinformationen des auf der optischen Achse angeordneten Detektorelements 1 gebildet. Die vierte Gruppe umfasst die Detektorelemente 20 bis 32. Die berechneten Kreuzkorrelationen zwischen den Helligkeitsinformationen des Detektorelements 1 und den Helligkeitsinformationen der Detektorelemente 20 bis 32 sind durch Pfeile symbolisiert.

In diesem Sinne sind in Fig. 15 Berechnungen von Kreuzkorrelationen zwischen Helligkeitsinformationen des Detektorelements 1 und den Helligkeitsinformationen der Detektorelemente 11, 14, 19, 21, 23, 27, 29 und 31 des 2D-Detektors veranschaulicht.

### Bezugszeichen

- 1 bis 32: Detektorelemente
- 41: Lichtquelle
- 42: Anregungsstrahlengang
- 4210: gemeinsamer Strahlengang
- 43: Hauptfarbteiler
- 44: Mittel (zur gesteuerten Veränderung der Ausdehnung des Strahlenbündels der Anregungsstrahlung)
- 45: Spiegel
- 46: Scanner
- 47: Objektiv
- 48: Probe
- 49: Probentisch
- 410: Detektionsstrahlengang
- 411: Zoomoptik
- 412: Zoomantrieb, Stellelement
- 413: Steuereinheit
- 414: Detektor
- 415: Antrieb (des Probentischs 49)
- 416: Stellelement, Antrieb
- EP: Eintrittspupille (des Objektivs 7)
- oA: optische Achse (des Detektionsstrahlengangs 410)

## Patentansprüche

1. Verfahren zur Erfassung von Helligkeitsinformationen einer Probe (48)
mit einem ersten Messblock umfassend:
- Schritt A: Beleuchten der Probe (48) mit einem fokussierten Strahlenbündel einer Anregungsstrahlung unter Verwendung eines Objektivs (47), wobei die Anregungsstrahlung unter dem Winkelbereich einer ersten Numerischen Apertur auf beziehungsweise in die Probe (48) gerichtet wird, indem eine erste Ausdehnung des Querschnitts des Strahlenbündels in einer Eintrittspupille (EP) des Objektivs (47) eingestellt wird beziehungsweise eingestellt ist;
- Schritt B: Erzeugen einer Detektionsstrahlung in einem durch die Beleuchtung bedingten Anregungsvolumen in der Probe (48);
- Schritt C: Erfassen der Detektionsstrahlung;
- Schritt D: Führen der erfassten Detektionsstrahlung entlang eines Detektionsstrahlengangs (410) und Abbilden der Detektionsstrahlung auf einen in einer Zwischenbildebene angeordneten ortsauflösenden Detektor (414), der eine Anzahl von in gleichen Abständen um eine optische Achse (oA) des Detektionsstrahlengangs (410) angeordnete und unabhängig voneinander auslesbare Detektorelemente (1 bis 32) aufweist;
- Schritt E: Erfassen von Helligkeitsinformationen mindestens der jeweiligen Mitglieder einer Gruppe von gleich weit von der optischen Achse (oA) entfernt angeordneten Detektorelementen (1 bis 32);
**dadurch gekennzeichnet, dass**
die erste Numerische Apertur anhand der Probe (48) ausgewählt wird, indem Werte mindestens einer Anzahl von optischen Eigenschaften der Probe (48) erfasst werden und anhand der erfassten Werte die aktuelle erste Numerische Apertur ermittelt und eingestellt wird, und in einem zweiten Messblock oder in weiteren Messblöcken die Schritte A bis E wiederholt werden, wobei in Schritt A, entweder eine zweite Ausdehnung des Strahlenbündels in der Eintrittspupille (EP) des Objektivs (47) eingestellt wird, die von der ersten Ausdehnung verschieden ist oder ein Durchmesser eines Strahlenbündels der erfassten Detektionsstrahlung gegenüber dem ersten Messblock beziehungsweise gegenüber einem vorhergehenden Messblock verändert wird; und eine Ausdehnung des Strahlenbündels der erfassten Detektionsstrahlung an die Größe der Detektionsfläche des Detektors (414) angepasst wird, sodass die Detektionsfläche vollständig ausgeleuchtet ist.

2. Verfahren nach Anspruch 1, **dadurch gekennzeichnet, dass** in jedem Messblock jeweils eine Anzahl virtueller Lochblenden (Pinholes) zunehmender Größe erzeugt wird, indem ausgehend von einer auf der optischen Achse (oA) befindlichen ersten Gruppe sequenziell jeweils eine weitere radial nach außen anschließende Gruppe berücksichtigt und mit den vorhergehenden Gruppen zu einer gemeinsamen Gruppe zusammengefasst wird, sodass in einem durch das fokussierte Strahlenbündel der Anregungsstrahlung bestimmten konfokalen Anregungsvolumen je Pinholegröße durch die der jeweiligen gemeinsamen Gruppe zugehörigen Detektorelemente (1 bis 32) Helligkeitsinformationen eines spezifischen Messvolumens erfasst werden.

3. Verfahren nach einem der vorhergehenden Ansprüche, **dadurch gekennzeichnet, dass** in den Messblöcken Messvolumina erfasst werden, deren mittlere Durchmesser sich senkrecht zur optischen Achse (oA) um mindestens 5 nm unterscheiden.

4. Verfahren nach einem der vorhergehenden Ansprüche, **dadurch gekennzeichnet, dass** in Schritt A mindestens eines weiteren Messblocks die Ausdehnung des Strahlenbündels in der Eintrittspupille (EP) des Objektivs (47) geringer als die Ausdehnung des Strahlenbündels in einem vorhergehenden Messblock gewählt wird.

5. Verfahren nach einem der vorhergehenden Ansprüche, **dadurch gekennzeichnet, dass** die Schritte A bis E in dem zweiten Messblock oder in weiteren Messblöcken wiederholt werden und anhand der erfassten Werte eine korrigierte aktuelle Numerische Apertur eines nachfolgenden Messblocks ermittelt und eingestellt wird.

6. Verfahren nach einem der vorhergehenden Ansprüche, **dadurch gekennzeichnet, dass** erfasste Helligkeitsinformationen ausgewählter Detektorelemente (1 bis 32) zueinander in eine räumliche und/oder zeitliche Beziehung gesetzt werden.

7. Verfahren nach Anspruch 6, **dadurch gekennzeichnet, dass** die Ermittlung einer räumlichen und/oder zeitlichen Beziehung der Helligkeitsinformationen ausgewählter Detektorelemente (1 bis 32) zum Zwecke der Durchführung einer Fluoreszenzkorrelationsspektroskopie erfolgt.

8. Verfahren nach Anspruch 7, **dadurch gekennzeichnet, dass** Detektionsstrahlung mindestens zweier Wellenlängen bewirkt und erfasst wird und Messwerte der verschiedenen Wellenlängen ortsbezogen miteinander verglichen werden.

9. Vorrichtung zur Erfassung von Helligkeitsinformationen einer Probe (48), mit
- einem Anregungsstrahlengang (42) zum Führen eines Strahlenbündels einer Anregungsstrahlung, umfassend ein Objektiv (47) zur Erzeugung eines Fokus in einem Probenraum; und
- einen Detektionsstrahlengang (410) zum Führen eines Strahlenbündels einer aus dem Probenraum kommenden und mittels des Objektivs (47) erfassten Detektionsstrahlung; mit
o einem ortsauflösenden Detektor (414) ausweisend eine Mehrzahl von Detektorelementen (1 bis 32), deren Helligkeitsinformationen unabhängig voneinander erfasst und ausgelesen werden können, und
o Mitteln (411) zur gesteuerten Veränderung einer Ausdehnung des Strahlenbündels der Detektionsstrahlung, sodass die Ausdehnung des Strahlenbündels der erfassten Detektionsstrahlung an die Größe der Detektionsfläche des Detektors (414) angepasst werden kann, um die Detektionsfläche vollständig auszuleuchten;
**dadurch gekennzeichnet, dass**
- in dem Anregungsstrahlengang (42) oder in einem gemeinsamen Abschnitt von Anregungsstrahlengang (42) und Detektionsstrahlengang (410) ein Mittel (44) zur gesteuerten Einstellung einer Ausdehnung des Querschnitts des Strahlenbündels in der Eintrittspupille (EP) des Objektivs (47) angeordnet ist, und dass eine Steuereinheit (413) vorhanden ist, die dazu eingerichtet ist das Verfahren nach Anspruch 1 auszuführen, die zur Ansteuerung des Mittels (44) zur Einstellung des Querschnitts des Strahlenbündels der Anregungsstrahlung in der Eintrittspupille (EP) des Objektivs (47) sowie des Mittels (411) zur Einstellung der Ausdehnung des Querschnitts des Strahlenbündels der Detektionsstrahlung mit diesen verbunden und derart konfiguriert ist, dass die jeweiligen Einstellungen der Mittel (44, 411) anhand vorbestimmter Beziehungen der Ausdehnungen der Querschnitte der Anregungsstrahlung und der Detektionsstrahlung erfolgt, indem die Steuereinheit (413) entsprechende Steuerbefehle generiert, indem Werte mindestens einer Anzahl von optischen Eigenschaften der Probe erfasst werden und anhand der erfassten Werte eine aktuelle Numerische Apertur ermittelt wird und an Stellelemente (412, 416) der betreffenden Mittel (44, 411) zur Einstellung übermittelt.

10. Vorrichtung nach Anspruch 9, **dadurch gekennzeichnet, dass** ein Strahlteiler (43) zum Trennen der erfassten Detektionsstrahlung von der Anregungsstrahlung und zum Lenken des Strahlenbündels der Detektionsstrahlung in den Detektionsstrahlengang (410) vorhanden ist.

11. Vorrichtung nach Anspruch 9 oder 10, **dadurch gekennzeichnet, dass** das Mittel (411) zur gesteuerten Veränderung einer Ausdehnung des Strahlenbündels der Detektionsstrahlung eine Zoomoptik (411) ist.

12. Vorrichtung nach einem der Ansprüche 9 bis 11, **dadurch gekennzeichnet, dass** das Mittel (44) zur gesteuerten Einstellung einer Ausdehnung des Querschnitts des Strahlenbündels in der Eintrittspupille (EP) des Objektivs (47) eine verstellbare Blende, mindestens eine in den Anregungsstrahlengang einbringbare Blende, ein Teleskop oder ein akustooptisches Element ist.

13. Verwendung einer Vorrichtung nach einem der Ansprüche 9 bis 12 zur Ermittlung einer Viskosität, eines Diffusionskoeffizienten wenigstens eines Typs in der Probe befindlicher Körper sowie einer Temperatur in mindestens einem Anregungsvolumen, indem optional anhand einer vorab ermittelten Abhängigkeit der Viskosität und/oder des Diffusionskoeffizienten der Probe von der Temperatur auf eine lokale Temperatur geschlossen wird.

## Claims

1. Method for acquiring brightness information from a sample (48), having a first measurement block comprising:
- step A: illuminating the sample (48) by means of a focused beam of excitation radiation using an objective (47), wherein the excitation radiation is directed at or into the sample (48) in the angular range of a first numerical aperture, by virtue of a first extent of the cross section of the beam in an entrance pupil (EP) of the objective (47) being set;
- step B: creating detection radiation in an excitation volume in the sample (48) due to the illumination;
- step C: capturing the detection radiation;
- step D: guiding the captured detection radiation along a detection beam path (410), and imaging the detection radiation on a spatially resolving detector (414) which is arranged in an intermediate image plane and has a number of detector elements (1 to 32) that are arranged at equal distances about an optical axis (oA) of the detection beam path (410) and are readable independently of one another;
- step E: acquiring pieces of brightness information from at least the respective members of a group of detector elements (1 to 32) arranged at the same distance from the optical axis (oA);
**characterized in that**
the first numerical aperture is selected on the basis of the sample (48) by virtue of acquiring values of at least a number of optical properties of the sample (48) and determining and setting the current first numerical aperture on the basis of the acquired values, and steps A to E are repeated in a second measurement block or in further measurement blocks, wherein in step A either a second extent of the beam in the entrance pupil (EP) of the objective (47) is set, the second extent differing from the first extent, or a diameter of a beam of the captured detection radiation is changed vis-à-vis the first measurement block or vis-à-vis a preceding measurement block; and an extent of the beam of the captured detection radiation is adapted to the size of the detection area of the detector (414), with the result that the detection area is fully illuminated.

2. Method according to Claim 1, **characterized in that** a number of virtual pinholes of increasing size are in each case created in each measurement block by virtue of, proceeding from a first group situated on the optical axis (oA), a further radially outwardly adjacent group being considered in sequence in each case and being combined with the preceding groups to form a common group, with the result that, in a confocal excitation volume determined by the focused beam of the excitation radiation, pieces of brightness information of a specific measurement volume are acquired for each pinhole size by way of the detector elements (1 to 32) belonging to the respective common group.

3. Method according to either of the preceding claims, **characterized in that** measurement volumes are captured in the measurement blocks, the mean diameters of said measurement volumes differing by at least 5 nm in a direction perpendicular to the optical axis (oA).

4. Method according to any of the preceding claims, **characterized in that**, in step A of at least one further measurement block, the extent of the beam in the entrance pupil (EP) of the objective (47) is chosen to be smaller than the extent of the beam in a preceding measurement block.

5. Method according to any of the preceding claims, **characterized in that** steps A to E are repeated in the second measurement block or in further measurement blocks, and a corrected current numerical aperture of a subsequent measurement block is determined and set on the basis of the acquired values.

6. Method according to any of the preceding claims, **characterized in that** acquired pieces of brightness information from selected detector elements (1 to 32) are related to one another in terms of space and/or time.

7. Method according to Claim 6, **characterized in that** a spatial and/or temporal relationship of the pieces of brightness information from selected detector elements (1 to 32) is determined for the purpose of performing fluorescence correlation spectroscopy.

8. Method according to Claim 7, **characterized in that** detection radiation is caused and captured at at least two wavelengths, and measurement values for the different wavelengths are compared with one another in location-related fashion.

9. Device for acquiring brightness information from a sample (48), comprising
- an excitation beam path (42) for guiding a beam of excitation radiation, comprising an objective (47) for creating a focus in a sample space; and
- a detection beam path (410) for guiding a beam of detection radiation which originates from the sample space and is captured by means of the objective (47); comprising
o a spatially resolving detector (414) having a plurality of detector elements (1 to 32), the pieces of brightness information from which can be acquired and read independently of one another, and
∘ means (411) for the controlled change of an extent of the beam of the detection radiation, with the result that the extent of the beam of the captured detection radiation can be adapted to the size of the detection area of the detector (414) in order to fully illuminate the detection area;
**characterized in that**
- a means (44) for the controlled adjustment of an extent of the cross section of the beam in the entrance pupil (EP) of the objective (47) is arranged in the excitation beam path (42) or in a common portion of the excitation beam path (42) and detection beam path (410), and **in that** a control unit (413) configured to carry out the method according to Claim 1 is present and, for controlling the means (44) for adjusting the cross section of the beam of the excitation radiation in the entrance pupil (EP) of the objective (47) and the means (411) for adjusting the extent of the cross section of the beam of the detection radiation, said control unit is connected to said means and configured such that the respective settings of the means (44, 411) are implemented on the basis of predetermined relationships between the extents of the cross sections of the excitation radiation and detection radiation, by virtue of the control unit (413) generating corresponding control commands by virtue of acquiring values of at least a number of optical properties of the sample and determining a current numerical aperture on the basis of the acquired values and transmitting these to actuators (412, 416) of the relevant adjustment means (44, 411).

10. Device according to Claim 9, **characterized in that** a beam splitter (43) is present for separating the captured detection radiation from the excitation radiation and for steering the beam of the detection radiation into the detection beam path (410).

11. Device according to Claim 9 or 10, **characterized in that** the means (411) for the controlled change of an extent of the beam of the detection radiation is a zoom optical unit (411).

12. Device according to any of Claims 9 to 11, **characterized in that** the means (44) for the controlled adjustment of an extent of the cross section of the beam in the entrance pupil (EP) of the objective (47) is an adjustable stop, at least one stop that is introducible into the excitation beam path, a telescope or an acoustooptic element.

13. Use of a device according to any of Claims 9 to 12 for determining a viscosity, a diffusion coefficient of at least one type of body situated in the sample, and a temperature in at least one excitation volume, by virtue of a local temperature being deduced, optionally on the basis of a dependence, established in advance, of the viscosity and/or diffusion coefficient of the sample on the temperature.

## Revendications

1. Procédé de détection d'informations de luminosité d'un échantillon (48) avec un premier bloc de mesure, comprenant :
- étape A : éclairage de l'échantillon (48) avec un faisceau focalisé d'un rayonnement d'excitation en utilisant un objectif (47), le rayonnement d'excitation étant dirigé sur ou dans l'échantillon (48) dans la plage angulaire d'une première ouverture numérique, en réglant une première extension de la section transversale du faisceau dans une pupille d'entrée (EP) de l'objectif (47) ;
- étape B : génération d'un rayonnement de détection dans un volume d'excitation de l'échantillon (48) provoqué par l'éclairage ;
- étape C : détection du rayonnement de détection ;
- étape D : guidage du rayonnement de détection détecté le long d'une trajectoire de rayons de détection (410) et représentation du rayonnement de détection sur un détecteur (414) à résolution spatiale disposé dans un plan d'image intermédiaire, qui comporte un nombre d'éléments détecteurs (1 à 32) disposés à distances égales autour d'un axe optique (OA) de la trajectoire de rayons de détection (410) et lisibles indépendamment les uns des autres ;
- étape E : détection d'informations de luminosité au moins des éléments respectifs d'un groupe d'éléments détecteurs (1 à 32) espacés de la même distance de l'axe optique (OA) ;
**caractérisé en ce que**
la première ouverture numérique est sélectionnée à l'aide de l'échantillon (48) en détectant des valeurs d'au moins un certain nombre de propriétés optiques de l'échantillon (48) et en déterminant et en réglant la première ouverture numérique actuelle à l'aide des valeurs détectées, et les étapes A à E sont répétées dans un deuxième bloc de mesure ou dans d'autres blocs de mesure, soit une deuxième extension du faisceau étant réglée dans la pupille d'entrée (EP) de l'objectif (47) à l'étape A, laquelle diffère de la première extension soit un diamètre d'un faisceau du rayonnement de détection détecté étant modifié par rapport au premier bloc de mesure ou par rapport à un bloc de mesure précédent ; et une extension du faisceau du rayonnement de détection détecté étant adaptée à la taille de la surface de détection du détecteur (414), si bien que la surface de détection est entièrement éclairée.

2. Procédé selon la revendication 1, **caractérisé en ce qu'**un nombre de diaphragmes virtuels à trou (trous d'épingle) de taille croissante est généré dans chaque bloc de mesure, en tenant compte séquentiellement respectivement d'un autre groupe se raccordant radialement vers l'extérieur en partant d'un premier groupe situé sur l'axe optique (OA) et en le combinant aux groupes précédents pour former un groupe commun, si bien que des informations de luminosité d'un volume de mesure spécifique sont détectées par les éléments détecteurs (1 à 32) appartenant au groupe commun respectif dans un volume d'excitation confocal défini par le faisceau focalisé du rayonnement d'excitation par taille de trou d'épingle.

3. Procédé selon l'une des revendications précédentes, **caractérisé en ce que** des volumes de mesure dont les diamètres moyens diffèrent d'au moins 5 nm perpendiculairement à l'axe optique (OA) sont détectés dans les blocs de mesure.

4. Procédé selon l'une des revendications précédentes, **caractérisé en ce que**, à l'étape A d'au moins un autre bloc de mesure, l'extension du faisceau dans la pupille d'entrée (EP) de l'objectif (47) est choisie inférieure à l'extension du faisceau dans un bloc de mesure précédent.

5. Procédé selon l'une des revendications précédentes, **caractérisé en ce que** les étapes A à E sont répétées dans le deuxième bloc de mesure ou dans d'autres blocs de mesure et une ouverture numérique actuelle corrigée d'un bloc de mesure suivant est déterminée et réglée à l'aide des valeurs détectées.

6. Procédé selon l'une des revendications précédentes, **caractérisé en ce que** des informations de luminosité détectées d'éléments détecteurs (1 à 32) sélectionnés sont mises en relation spatiale et/ou temporelle les unes par rapport aux autres.

7. Procédé selon la revendication 6, **caractérisé en ce qu'**une relation spatiale et/ou temporelle des informations de luminosité d'éléments détecteurs (1 à 32) sélectionnés est déterminée pour la mise en œuvre d'une spectroscopie de corrélation de fluorescence.

8. Procédé selon la revendication 7, **caractérisé en ce que** le rayonnement de détection d'au moins deux longueurs d'onde est provoqué et détecté et des valeurs de mesure des différentes longueurs d'onde sont comparées les unes aux autres en fonction du lieu.

9. Appareil pour détecter des informations de luminosité d'un échantillon (48), avec
- une trajectoire de rayons d'excitation (42) pour guider un faisceau d'un rayonnement d'excitation, comprenant un objectif (47) pour générer un foyer dans une chambre à échantillon ; et
- une trajectoire de rayons de détection (410) pour guider un faisceau d'un rayonnement de détection provenant de la chambre à échantillon et détecté au moyen de l'objectif (47) ; avec
∘ un détecteur (414) à résolution spatiale comportant une multitude d'éléments détecteurs (1 à 32) dont les informations de luminosité peuvent être détectées et lues indépendamment les unes des autres, et
o des moyens (411) de modification commandée d'une extension du faisceau du rayonnement de détection, si bien que l'extension du faisceau du rayonnement de détection détecté peut être adaptée à la taille de la surface de détection du détecteur (414) pour éclairer complètement la surface de détection ;
**caractérisé en ce que**
- un moyen (44) pour le réglage commandé d'une extension de la section transversale du faisceau dans la pupille d'entrée (EP) de l'objectif (47) est disposé dans la trajectoire de rayons d'excitation (42) ou dans une section commune de la trajectoire de rayons d'excitation (42) et de la trajectoire de rayons de détection (410), et qu'une unité de commande (413) est présente, qui est mise au point pour exécuter le procédé selon la revendication 1, qui est reliée pour piloter le moyen (44) de réglage de la section transversale du faisceau du rayonnement d'excitation dans la pupille d'entrée (EP) de l'objectif (47) et le moyen (411) de réglage de l'extension de la section transversale du faisceau du rayonnement de détection à ceux-ci et est configurée de telle manière que les réglages respectifs des moyens (44, 411) sont effectués à l'aide de relations prédéfinies entre les extensions des sections transversales du rayonnement d'excitation et du rayonnement de détection, **en ce que** l'unité de commande (413) génère des ordres de commande correspondants en détectant des valeurs d'au moins un certain nombre de propriétés optiques de l'échantillon et en déterminant une ouverture numérique actuelle à l'aide des valeurs détectées et en la transmettant à des éléments d'actionnement (412, 416) des moyens (44, 411) concernés.

10. Dispositif selon la revendication 9, **caractérisé en ce qu'**est présent un diviseur de faisceau (43) pour séparer le rayonnement de détection détecté du rayonnement d'excitation et pour diriger le faisceau du rayonnement de détection dans la trajectoire de rayons de détection (410).

11. Dispositif selon la revendication 9 ou 10, **caractérisé en ce que** le moyen (411) pour la modification commandée d'une extension du faisceau du rayonnement de détection est une optique de zoom (411).

12. Dispositif selon l'une des revendications 9 à 11, **caractérisé en ce que** le moyen (44) de réglage commandé d'une extension de la section transversale du faisceau dans la pupille d'entrée (EP) de l'objectif (47) est un diaphragme ajustable, au moins un diaphragme pouvant être introduit dans la trajectoire de rayons d'excitation, un télescope ou un élément acousto-optique.

13. Utilisation d'un dispositif selon l'une des revendications 9 à 12 pour déterminer une viscosité, un coefficient de diffusion d'au moins un type de corps présent dans l'échantillon et une température dans au moins un volume d'excitation, en déduisant de la température en option une température locale à l'aide d'une dépendance préalablement déterminée de la viscosité et/ou du coefficient de diffusion de l'échantillon.
